# DEMANDE DE BREVET EUROPEEN

(11) **EP 1 920 846 A1**
(43) Date de publication de la demande: **14.05.2008**
(21) Numéro de dépôt: 06447118.8
(22) Date de dépôt: 10.11.2006
(51) Int. Cl.: B02C 18/14

(54) **Contre-couteau pour outil de coupe rotatif dans un granulateur**

(71) Demandeur: Precicarb SA, 4800 Petit-Rechain (BE)
(72) Inventeur: Kerf, Gérard, 4837 Baelen (BE)
(74) Mandataire: Lerho, Marc J. A.

(57) **Abrégé**

La présente invention se rapporte à un outil de coupe rotatif présentant un couteau sous forme d'un premier cylindre tournant (2) muni de plusieurs lames (2A) à arêtes ou dents tranchantes en prise avec un second cylindre contre-couteau (3) tournant en sens opposé et coopérant avec celui-ci pour découper en granules une matière se présentant sous forme de fil (1), caractérisé en ce que le second cylindre contre-couteau (3) présente une surface exempte de rainures usinées ou préformées.

## Description

### Objet de l'invention

La présente invention se rapporte à un outil de coupe à couteaux présentant une résistance renforcée à l'usure, en particulier pour la découpe en granules de toute matière synthétique ou minérale en fil (plastique, fibre de verre, etc.), enrobée ou non, avant son utilisation comme matière première.

L'invention concerne plus particulièrement un dispositif contre-couteau collaborant avec un couteau cylindrique rotatif présentant plusieurs lames ou arêtes tranchantes individuelles disposées régulièrement ou non autour d'un axe.

### Etat de la technique et position du problème

Dans la fabrication ou le recyclage de matières plastiques et/ou minérales par exemple, on connaît des granulateurs comportant une extrudeuse ou une bobine, qui fonctionnent selon le principe du hachoir. Dans le cas de l'extrudeuse, la matière plastique est chauffée et la masse fondue poussée au travers d'un disque à trous.

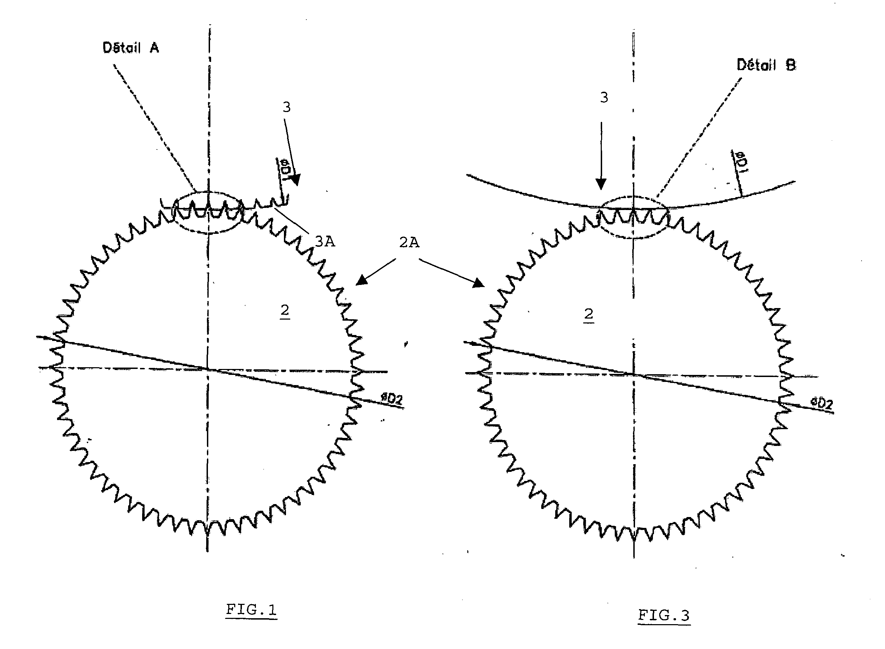

Comme représenté sur les figures 1 et 2, les fils 1 sortants ou se déroulant sont alors coupés en granules par des couteaux circulaires 2 en matière dure, par exemple en acier traité, acier rapide HSS, carbure de tungstène, etc., munis de dents 2A, droites ou hélicoïdales, qui engrènent avec un contre-couteau 3 en matière plus tendre et/ou élastique que ledit couteau, par exemple en caoutchouc, polyuréthane, etc.

Le contre-couteau 3 présente des rainures usinées 3A qui coopèrent en fonctionnement avec les dents 2A du couteau associé 2 et dont le profil correspond de préférence à celui des dents dudit couteau.

Ce mécanisme présente le désavantage de briser les fibres par pliage plutôt que de couper la matière travaillée, ce qui résulte en une section de coupe non nette et en la production de beaucoup de poussière.

L'état de la technique propose des applications de couteaux et contre-couteaux de ce type. Par exemple, le document US-A-5,411,216 décrit une machine de déchiquetage comprenant deux arbres parallèles tournant en sens inverse auxquels sont fixés des couteaux cylindriques dont les saillies ou dents sont disposées proportionnellement et s'engrènent les unes dans les autres. Les arbres sont disposés l'un par rapport à l'autre de manière telle qu'un couteau fixé au premier arbre s'insère dans l'espace proportionnel entre deux couteaux identiques du second arbre. Les bords des parties supérieure et inférieure de chaque couteau assurent l'opération de coupe, ce qui permet de réduire d'environ 90% les exigences de puissance de la machine.

Dans le document FR-A-2 007 173, on décrit un appareil de fragmentation comprenant un premier couteau et un deuxième couteau allongés munis de dents coupantes disposées hélicoïdalement, le deuxième couteau étant en prise avec le premier au niveau de leurs séries de dents et entraînant celui-ci. Les bords latéraux menant des sommets des dents du deuxième couteau sont en contact avec les bords latéraux menés des sommets des dents du premier couteau. Les lignes d'intersection des périphéries externes des couteaux et des bords latéraux précités forment des arêtes coupantes qui coopèrent pour cisailler le matériau placé entre elles juste avant le moment où les bords latéraux sur le deuxième couteau commencent à recouvrir les bords latéraux du premier couteau et permettent aux arêtes coupantes du premier couteau d'entraîner les arêtes coupantes du deuxième couteau.

Commercialement, on trouve sur le marché des outils de coupe de diamètre allant de 50 à 200 mm et de longueur allant de 50 à 600 mm, soit monobloc en acier traité ou alliages spéciaux, soit à plaquettes brasées en carbure.

### Buts de l'invention

La présente invention vise à fournir une solution qui permette de s'affranchir des inconvénients de l'état de la technique.

L'invention vise notamment à fournir un outil de coupe pour matière extrudée ou se présentant sous forme de fil, permettant une meilleure qualité du produit découpé.

En particulier, l'invention a pour but l'obtention d'une coupe plus franche du produit découpé, la réduction de production de poussière ainsi qu'une forte diminution des pertes en matières premières, en comparaison avec l'état de la technique.

### Principaux éléments caractéristiques de l'invention

Un premier objet de la présente invention se rapporte à un outil de coupe rotatif présentant un couteau sous forme d'un premier cylindre tournant muni de plusieurs lames à arêtes ou dents tranchantes en prise avec un second cylindre contre-couteau tournant en sens opposé et coopérant avec celui-ci pour découper en granules une matière se présentant sous forme de fil, caractérisé en ce que le second cylindre contre-couteau présente une surface exempte de rainures usinées ou préformées, c'est-à-dire coulées dans la masse.

Un second objet de l'invention concerne l'utilisation de l'outil de coupe précité, pour la découpe en granules de matière synthétique ou minérale, de préférence du plastique ou de la fibre de verre, se présentant sous forme de fil, enrobée ou non.

Des modalités d'exécution préférées de l'invention sont décrites dans les revendications dépendantes.

### Brève description des figures

La figure 1, déjà mentionnée, représente une vue en coupe d'un outil de coupe pour granulateur avec couteau et contre-couteau rainurés et en prise par engrenage, selon l'état de la technique.

La figure 2, déjà mentionnée, représente une vue de détail correspondant à la figure 1.

La figure 3 représente une vue en coupe d'un outil de coupe pour granulateur avec couteau rainuré et contre-couteau à surface lisse, selon la présente invention.

La figure 4 représente une vue de détail correspondant à la figure 3.

La figure 5 montre une forme d'exécution préférée de l'invention concernant le profil des dents du couteau.

### Description d'une forme d'exécution préférée de l'invention

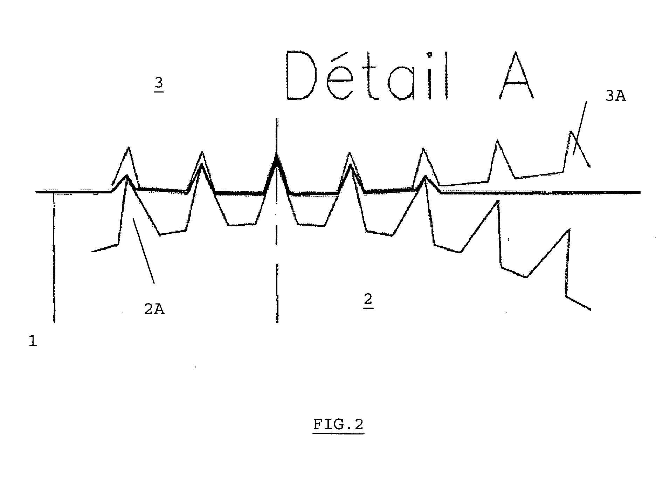

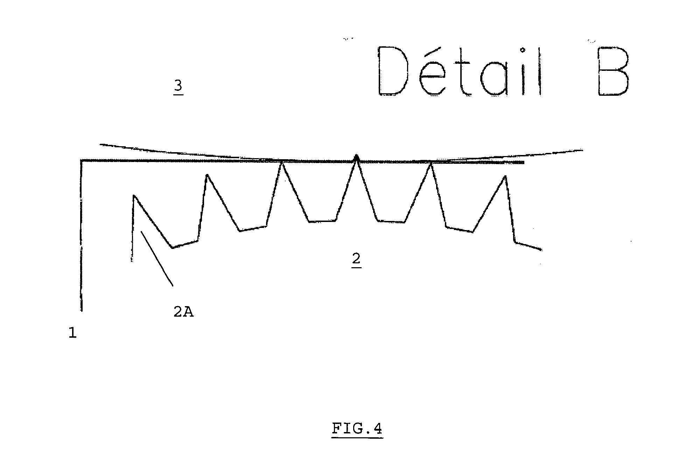

L'objet de la présente invention consiste à remplacer le contre-couteau à rainures usinées ou préformées par un contre-couteau 3 cylindrique à surface lisse (voir figures 3 et 4).

Selon l'invention, la matière du contre-couteau est plus tendre et/ou plus élastique que la matière du couteau. Celle-ci est de préférence le caoutchouc, le polyuréthane, etc.

Le couteau sera réalisé dans une matière présentant une grande résistance à l'usure, comme par exemple le carbure de tungstène (WC), la céramique, l'acier rapide HSS, etc., éventuellement revêtue de nitrure de titane (TiN), carbonitrure de titane (TiCN), nitrure d'aluminium de titane (TiAlN), nitrure de chrome (CrN), etc.

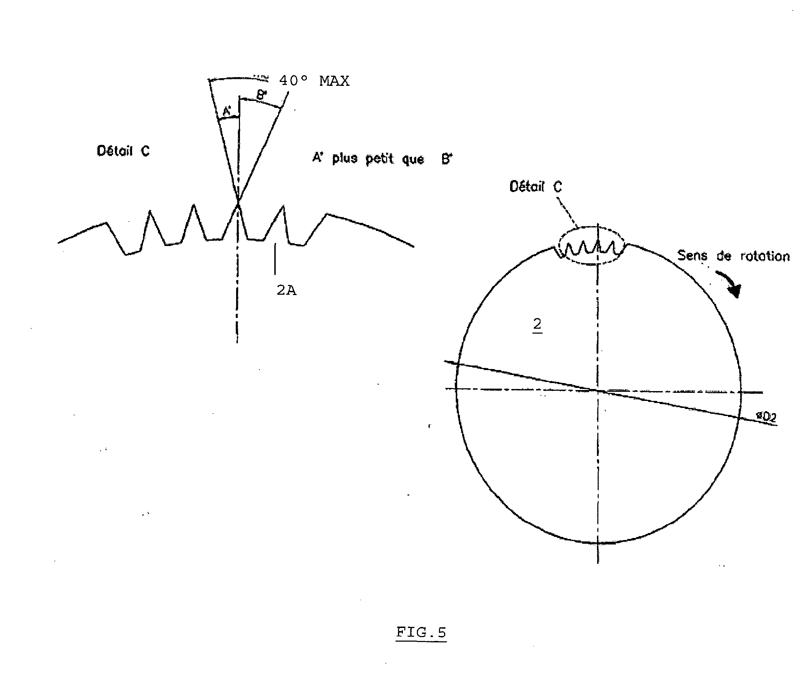

L'angle du taillant sera de maximum 40° et réparti dissymétriquement par rapport au sens de rotation du couteau (voir figure 5). De plus, les arêtes tranchantes auront de préférence des flancs totalement ou partiellement en forme de développante de cercle.

L'invention présente les avantages suivants :
- coupe plus franche par rapport aux résultats obtenus avec les dispositifs de l'état de la technique;
- production moindre de poussière, ce qui favorise le bon fonctionnement du mécanisme et diminue les frais d'entretien, diminue les problèmes liés à la protection des travailleurs et enfin diminue fortement les pertes de matières premières.

## Revendications

1. Outil de coupe rotatif présentant un couteau sous forme d'un premier cylindre tournant (2) muni de plusieurs lames (2A) à arêtes ou dents tranchantes en prise avec un second cylindre contre-couteau (3) tournant en sens opposé et coopérant avec celui-ci pour découper en granules une matière se présentant sous forme de fil (1), **caractérisé en ce que** le second cylindre contre-couteau (3) présente une surface exempte de rainures usinées ou préformées.

2. Outil selon la revendication 1,
**caractérisée en ce que** ladite surface est essentiellement lisse.

3. Outil selon la revendication 1 ou 2,
**caractérisé en ce que** les arêtes tranchantes des lames (2A) sont à affûtage droit ou hélicoïdal et disposées régulièrement sur la surface extérieure dudit premier cylindre tournant (2).

4. Outil selon l'une quelconque des revendications 1 à 3, **caractérisé en ce que** la matière dans laquelle est réalisé le contre-couteau (3) est plus tendre et/ou plus élastique que celle dans laquelle sont réalisées les lames (2A).

5. Outil selon la revendication 4,
**caractérisé en ce que** la matière dans laquelle est réalisé le contre-couteau (3) est un élastomère ou un plastique tel que le polyuréthane.

6. Outil selon l'une quelconque des revendications précédentes, **caractérisé en ce que** les lames (2A) sont en carbure cémenté à base de carbure de tungstène, en acier rapide ou à haute résistance, en diamant, en céramique ou en cermet, éventuellement revêtus de nitrure de titane, nitrure d'aluminium de titane ou carbonitrure de titane, nitrure de chrome, mono- ou multicouches.

7. Outil selon l'une quelconque des revendications précédentes, **caractérisé en ce que** les lames (2A) s'étendent sur toute la longueur du premier cylindre (2) avec un profil tranchant monotone et régulier, dépourvu de dents sur toute la longueur des lames.

8. Outil selon la revendication 7,
**caractérisé en ce que** les arêtes tranchantes (2A) sont dissymétriques par rapport au sens de rotation du premier cylindre (2) et présentent un angle de taillant maximal de 40°.

9. Outil selon la revendication 7 ou 8,
**caractérisé en ce que** les arêtes tranchantes (2A) ont des flancs ou des parties de flancs en forme de développante de cercle.

10. Utilisation d'un outil de coupe selon l'une quelconque des revendications précédentes, pour la découpe en granules de matière synthétique ou minérale, de préférence du plastique ou de la fibre de verre, se présentant sous forme de fil.

11. Utilisation selon la revendication 10, **caractérisée en ce que** ladite matière est enrobée.
